Europäisches Patentamt

European Patent Office

Office européen des brevets

(19)

(11) **EP 0 607 384 B1**

(12) **EUROPÄISCHE PATENTSCHRIFT**

(45) Veröffentlichungstag und Bekanntmachung des Hinweises auf die Patenterteilung:
**14.11.2001   Patentblatt 2001/46**

(21) Anmeldenummer: **93915677.4**

(22) Anmeldetag: **31.07.1993**

(51) Int Cl.⁷: **G01N 27/419**

(86) Internationale Anmeldenummer:
**PCT/DE93/00672**

(87) Internationale Veröffentlichungsnummer:
**WO 94/04913 (03.03.1994 Gazette 1994/06)**

(54) **POLAROGRAPHISCHER SENSOR**

POLAROGRAPHIC SENSOR

SONDE POLAROGRAPHIQUE

(84) Benannte Vertragsstaaten:
**DE FR GB IT**

(30) Priorität: **11.08.1992   DE 4226537**

(43) Veröffentlichungstag der Anmeldung:
**27.07.1994   Patentblatt 1994/30**

(73) Patentinhaber: **ROBERT BOSCH GMBH**
**70442 Stuttgart (DE)**

(72) Erfinder:
• **FRIESE, Karl-Hermann**
**D-7250 Leonberg (DE)**
• **GRUENWALD, Werner**
**D-7016 Gerlingen (DE)**
• **STAHL, Roland**
**D-7149 Freiberg a. N. (DE)**

(56) Entgegenhaltungen:
EP-A- 0 351 960      EP-A- 0 533 991
WO-A-90/10862      WO-A-92/07252
DE-A- 3 315 654      GB-A- 2 194 846
US-A- 4 264 425

## Beschreibung

Stand der Technik

Es ist bekannt, daß sich die Konzentration bestimmter Komponenten in Gasgemischen mittels polarographischer Sensoren bestimmen läßt. Das geschieht beispielsweise bei Abgasen von Verbrennungsmotoren, die mit gasförmigen oder flüssigen Kraftstoffen betrieben werden, wie Otto- oder Dieselmotore. Es ist erwünscht, den Gehalt des Abgases an Sauerstoff und bzw. oder an verbrennbaren Komponenten, wie Wasserstoff, Kohlenwasserstoffen und Kohlenmonoxid, zu kennen, weil diese Werte Rückschlüsse auf den Betriebszustand des Motors gestatten, d.h. ermöglichen, zwischen einer Betriebsweise mit "mageren" oder "fetten" Luft/Kraftstoff-Gemischen zu unterscheiden.

Die Kenntnis des Betriebszustandes ist die Grundlage für regelnde Eingriffe mit dem Ziel, die Zusammensetzung des Luft/Treibstoff-Gemisches jeweils zu optimieren. In mageren Luft Treibstoff-Gemischen ist Sauerstoff im stöchiometrischen Überschuß vorhanden, und im Abgas werden dementsprechend erhebliche Konzentrationen an Sauerstoff gemessen, während verbrennbare Komponenten allenfalls in untergeordneter Menge auftreten. Umgekehrt ist es, wenn der Motor mit fetten Luft/ Treibstoff-Gemischen betrieben wird. Dann sind im Abgas noch erhebliche Mengen an verbrennbaren Komponenten vorhanden, während Sauerstoff allenfalls in untergeordneter Konzentration auftritt. Eine Maßzahl zur Unterscheidung zwischen mageren und fetten Gemischen ist die Lambda($\lambda$)-Zahl, das Aequivalentverhältnis von Sauerstoff zu verbrennbaren Anteilen. Sie ist >1 in mageren Gemischen, <1 in fetten Gemischen und =1, wenn Sauerstoff und verbrennbare Komponenten im stöchiometrischen Verhältnis vorliegen, was im allgemeinen angestrebt wird.

Polarographische Sonden beruhen auf der Messung des Grenzstromes einer Pumpzelle. Für Messungen von Sauerstoff in Abgasen aus mageren Gemischen ("mageren Abgasen") wird vor der Kathode eine Diffusionsbarriere angeordnet, die es dem Sauerstoff so sehr erschwert, zur Kathode zu gelangen, daß auch bei nur mäßiger Pumpspannung der gesamte molekulare Sauerstoff praktisch unverzüglich zu $0^{2-}$ -Ionen reduziert wird, die durch den Elektrolyten wandern und an der Anode wieder als molekularer Sauerstoff entladen werden. Die Stromstärke läßt sich durch höhere Pumpspannung nicht mehr vergrößern; es fließt ein Grenzstrom, dessen Stärke praktisch nur von der Sauerstoffkonzentration im Abgas und von der Charakteristik der Diffusionsbarriere, insbesondere von deren Schichtdicke und Porösität, abhängt. Eicht man die Sonde mit Referenzgasen, so läßt sich ein eindeutiger Zusammenhang zwischen der Stärke des Grenzstromes und der Sauerstoffkonzentration herstellen.

Bei Abgasen von fetten Luft/Kraftstoff-Gemischen ("fetten Abgasen") werden die darin in erheblicher Menge enthaltenen verbrennbaren Anteile anodisch oxidiert. Auch dabei kann man einen konzentrationsabhängigen Grenzstrom messen, wenn man die Diffusion der verbrennbaren Anteile zur Anode behindert. Bei herkömmlichen Meßsonden kann das erreicht werden, indem man die Pumpzelle umpolt, d.h. Anode und Kathode vertauscht. Es ist also nur eine Diffusionsbarriere vor einer der Elektroden vorhanden, die bei Messungen in mageren Gasen als Kathode, bei Messungen in fetten Gasen als Anode geschaltet ist. Es ist ein Nachteil dieser Sonden, daß sie zur fett/mager-Unterscheidung umgepolt werden müssen, denn dies erfordert zusätzlichen Meß- und Regelaufwand. Zudem arbeiten die Sonden unmittelbar nach einem Umschaltvorgang nicht zuverlässig, weil sich erst nach gewisser Zeit ein stationärer Zustand an den umgepolten Elektroden einstellt.

Aus EP-B1-0 194 082 ist ein Sensor mit zwei Zellen bekannt geworden, der folgende Elemente aufweist :

(a) Eine Pumpzelle mit einem ersten festen Elektrolyten und, daran angebracht, einer ersten und einer zweiten porösen Elektrode,

(b) eine "elektrochemische Fühlzelle" mit einem zweiten festen Elektrolyten sowie einer dritten und vierten Elektrode, wobei die dritte Elektrode in der Nähe der ersten Elektrode der Pumpzelle angebracht ist,

(c) einen Diffusionswiderstand, der dem Meßgas den Zutritt zur ersten und zur dritten Elektrode erschwert,

(d) eine Einrichtung zum Anlegen eines Pumpstroms zwischen der ersten und der zweiten Elektrode der Pumpzelle,

(e) eine Einrichtung zur Messung der Potentialdifferenz (oder elektromotorischen Kraft) zwischen der dritten und der vierten Elektrode der "elektrochemischen Fühlzelle" und schließlich

(f) eine Einrichtung zum Anlegen eines Hilfspumpstroms zwischen der dritten Elektrode der "elektrochemischen Fühlzelle" und einer anderen Elektrode.

Dieser kompliziert aufgebaute Sensor gibt also (siehe Merkmal (e)) ein potentiometrisch ermitteltes Steuersignal ab. Zudem erfordert der Übergang zwischen fett und mager eine Elektrodenumpolung, mit den zuvor beschriebenen Nachteilen.

Aus der US-A-4,264,425 ist eine Vorrichtung zur Bestimmung des Luft-/Kraftstoff-Verhältnisses bekannt, die sowohl bei mageren Abgasverhältnissen als auch bei fetten Abgasverhältnissen einsetzbar ist. Die Vorrichtung besitzt eine erste Konzentrationszelle mit einer ersten Meßelektrode und einer ersten Referenzelektrode sowie eine zweite Konzentrationszelle mit einer zweiten Meßelektrode und einer zweiten Referenzelektrode. Die beiden Referenzelektroden sind jeweils mit einer porösen Schicht bedeckt. An die Elektroden der ersten Konzentrationszelle ist eine erste Spannungsquelle und an die Elektroden der zweiten Konzentrationszelle eine zweite Spannungsquelle angelegt, wobei die Spannungsquellen jeweils einen konstanten Strom liefern. Vom Pumpstrom der beiden Spannungsquellen wird durch elektrolytisch gepumpten Sauerstoff ein Sauerstoff-Konzentrationsunterschied zwischen den Elektroden der einzelnen Konzentrationszellen aufgebaut. Als Meßsignal wird dabei jedoch nicht der zwischen den Elektroden fließende Pumpstrom herangezogen, sondern die sich aufgrund des Sauerstoff-Konzentrationsunterschiedes zwischen den Elektroden der jeweiligen Konzentrationszelle bildende elektromotorische Kraft (EMK). Je nach Abgasverhältnis (fett oder mager) wird die elektromotorische Kraft der ersten Konzentrationszelle oder der zweiten Konzentrationszelle verwendet.

Vorteile der Erfindung

Die Nachteile der Sensoren des Standes der Technik werden vermieden durch die polarographischen Sensoren mit den Merkmalen des nachfolgenden Patentanspruchs 1. Sie sind Breitbandsensoren, also für Verwendung in mageren und fetten Gasen geeignet. Sie arbeiten zuverlässig in den für die Abgasmessung üblichen Temperaturbereichen und erfordern keine Elektrodenumpolung beim Übergang zwischen fett und mager, vermeiden also die damit verbundenen, zuvor beschriebenen Nachteile. Die Auswahl der Pumpzelle, deren Signal für die Regelung des Luft/Treibstoff-Gemisches maßgebend ist, erfolgt mittels Schaltungen, die empfindlich und prompt reagieren und die Sensoren auch im Dauerbetrieb wenig störanfällig machen. Ein weiterer Vorteil liegt darin, daß die Sensoren nach der Erfindung in zuverlässiger, einheitlicher Technologie hergestellt werden können, vorzugsweise in Siebdrucktechnik. Die Schichten auf jeder Seite des Sensors können zusammen gedruckt werden.

Zeichnungen

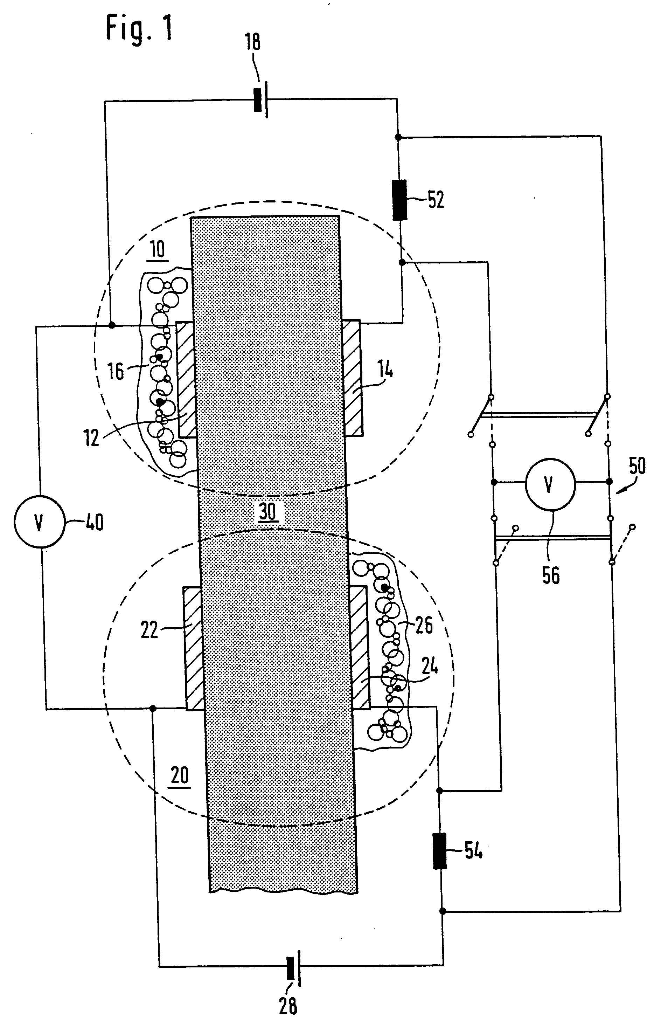

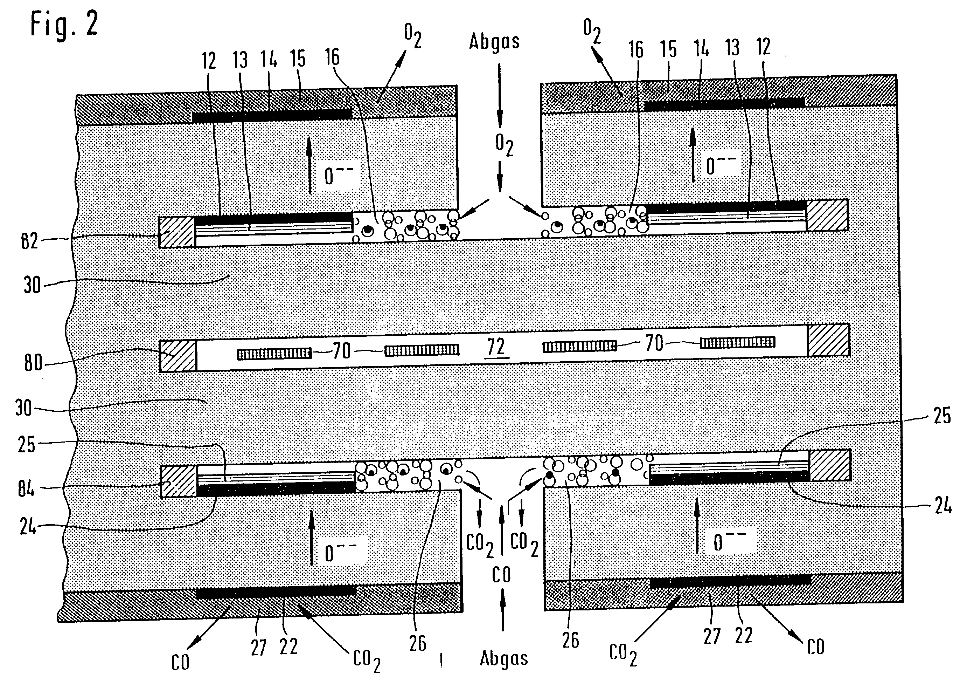

Zwei Ausführungsbeispiele der Erfindung sind in den Zeichnungen dargestellt und in der nachfolgenden Beschreibung näher erläutert. Figur 1 zeigt eine Prinzipskizze einer Ausführungsform der Erfindung mit einer ausführlich dargestellten Schaltung zur Unterscheidung von fetten und mageren Gasen. Figur 2 stellt eine reale Ausführungsform der Erfindung ohne eine solche Schaltung dar.

Beschreibung der Erfindung

Die polarographischen Sensoren nach der Erfindung eignen sich zur Bestimmung von Sauerstoff in mageren und von oxidierbaren Anteilen, wie Kohlenwasserstoffen, Wasserstoff und insbesondere Kohlenmonoxid, in fetten Abgasen. Die Sensoren enthalten die üblichen Pumpzellen, die zweckmäßig auf ein und demselben Elektrolyten, der gleichzeitig als Träger dient, angeordnet sind. Als Elektrolyten setzt man vorzugsweise Zirkondioxid, gegebenenfalls dotiert mit anderen Metalloxiden, wie Yttriumoxid, Magnesiumoxid und Ytterbiumoxid, ein. Zirkondioxid und dessen Gemische mit den erwähnten anderen Metalloxiden zeigen bei Temperaturen ab etwa 300°C Ionenleitfähigkeit für Sauerstoff. Die Sensoren nach der Erfindung werden dementsprechend vorteilhaft bei Temperaturen zwischen etwa 450°C und etwa 800°C betrieben. Kathode und Anode bestehen aus den üblichen, zumeist katalytisch wirksamen metallischen Materialien, z.B. aus Platin.

Es ist ein wichtiges Merkmal der Sensoren nach der Erfindung, daß die Kathode der einen und die Anode der anderen Pumpzelle mit jeweils einer Diffusionsbarriere versehen sind, die bei mageren Abgasen den Zutritt von Sauerstoff zur Kathode und bei fetten Abgasen den Zutritt von verbrennbaren Anteilen zur Anode behindern, so daß sich schon bei mäßiger Pumpspannung von <1 V, beispielsweise von 0,8 V, ein Grenzstrom einstellt. Die Diffusionsbarrieren können z.B. aus einem porösen keramischen Material bestehen. Bei einer anderen Variante sind die betreffenden Elektroden am Ende eines ungefüllten Kanals mit so großem Verhältnis von Länge und Querschnitt angeordnet, daß die Diffusion der genannten gasförmigen Komponenten zur Elektrode wirksam behindert wird.

In Figur 1 sind die Kathode 12 und die Anode 14 der ersten Pumpzelle 10 sowie die Kathode 22 und die Anode 24 der zweiten Pumpzelle 20 auf dem festen Elektrolyten 30 angeordnet. Die Kathode 12 und die Anode 24 sind von den Diffusionsbarrieren 16 und 26 umgeben, die aus keramischem Material bestehen und die Diffusion von Sauerstoff zur Kathode 12 und die Diffusion von verbrennbaren Anteilen zur Anode 24 behindern. Während des Betriebs wird der Sensor durch eine im Elektrolyten 30, der gleichzeitig als Träger der beiden Pumpzellen dient, angeordnete, in der Figur nicht dargestellte Heizung auf Temperaturen von etwa 500 bis etwa 800 °C erhitzt. Die Stromquellen 18 und 28 liefern die Betriebsspannung von ca. 1 V für die Pumpzellen 10 und 20.

Bei magerem Abgas besteht in der Pumpzelle 10 infolge der Diffusionsbarriere 16 ein erheblicher Unterschied in den Sauerstoffkonzentrationen an der Kathode 12 und der Anode 14. Der an der Kathode 12 ankommende Sauerstoff wird praktisch unverzüglich als Sauerstoffionen "abgesaugt" und an der Anode zu molekularem Sauerstoff entladen :

$$O + 4e \rightarrow 2\,O^{2-} \qquad \text{(Kathode)}$$

$$2\,O^{2-} \rightarrow O_2 + 2e \qquad \text{(Anode)}$$

Daraus resultiert ein der Sauerstoffkonzentration im Abgas entsprechender Grenzstrom, dessen Stärke bis zu 10 mA betragen kann, im allgemeinen aber nur etwa 2mA beträgt. In der Pumpzelle 20 herrschen dagegen bei mageren Abgasen an der Kathode 22 und der Anode 24 vergleichbare Sauerstoffkonzentrationen, und es fließt kein Grenzstrom, weil die Sauerstoffkonzentration an der Kathode so hoch ist, daß eine Erhöhung der Pumpspannung zu einem stärkeren Stromfluß durch vermehrte Reduktion von molekularem Sauerstoff zu Sauerstoffionen und damit zu einer größeren Stromstärke führen würde.

Umgekehrt liegen die Verhältnisse bei fetten Abgasen. Dann herrschen in der Pumpzelle 20 infolge der Diffusionsbarriere 26 an der Anode 24 wesentlich niedrigere Konzentrationen an verbrennbaren Anteilen, beispielsweise Kohlenmonoxid, als an der Kathode 22. Dieses wird daher an der Anode praktisch unverzüglich durch Sauerstoff zu Kohlendioxid oxidiert. Der Sauerstoff wandert als Ion durch den Elektrolyten, nachdem er an der Kathode durch Reduktion von Wasser oder, nach der folgenden Gleichung, von Kohlendioxid entstanden ist :

$$CO + 2e \rightarrow CO + O^{2-} \qquad \text{(Kathode)}$$

$$CO^2 + O^{2-} \rightarrow CO_2 + 2e \qquad \text{(Anode)}$$

Kohlendioxid ist - sowohl im fetten als auch im mageren - Abgas reichlich vorhanden, so daß die Stärke des Grenzstromes durch die Menge des zur Anode diffundierenden Kohlenmonoxids bestimmt wird und so ein Maß für dessen Konzentration im Abgas ist. Voraussetzung für die Entstehung eines anodischen Grenzstromes ist, daß die Konzentration der oxidierbaren Bestandteile Kohlenmonoxid, Wasserstoff und Kohlenwasserstoffe wesentlich kleiner ist als diejenige der reduzierbaren Bestandteile Wasser und Kohlendioxid. Das ist jedoch in Abgasen von Verbrennungsmotoren immer der Fall.

Der Spannungsmesser 40 dient der Unterscheidung von mageren und fetten Abgasen. Er bildet mit der Kathode 12 und der Kathode 24 eine Nernst-Zelle, deren jeweilige Elektromotorische Kraft (EMK) die Unterscheidung ermöglicht. Bei mageren Abgasen herrscht an der Kathode 22 ein relativ hoher Sauerstoffpartialdruck, während der Sauerstoffpartialdruck an der Kathode 12 infolge der anliegenden Pumpspannung praktisch 0 ist. Die EMK liegt dann im Bereich kurz unterhalb 1 V. Bei fetten Abgasen sind die Sauerstoffkonzentrationen an den beiden Elektroden praktisch gleich und sehr gering, so daß die EMK im Bereich von 0 V liegt.

Der elektronische Schalter 50 bewirkt, daß das dem Betriebszustand des Motors (mager oder fett) entsprechende Signal an die Vorrichtung zur Regelung der Zusammensetzung des zuzuführenden Luft/Kraftstoff-Gemisches weitergeleitet wird. Der Grenzstrom der jeweils maßgeblichen Pumpzelle wird mittels der Widerstände 52 und 54 und des Spannungmessers 56 bestimmt. Man mißt den Spannungsabfall an den Widerständen, der dem Grenzstrom der jeweiligen Pumpzelle proportional ist.

Figur 2 stellt eine reale Ausführungsform eines Sensors nach der Erfindung dar, die dem Prinzip nach Figur 1 entspricht, jedoch ohne die Schaltung zur Unterscheidung von mageren und fetten Gasen. Dabei ist im oberen Teil, der die erste Pumpzelle enhält, der Betriebszustand mit Grenzstrom im mageren Abgas dargestellt. Im unteren Teil, in dem sich die zweite Pumpzelle befindet, wird der Betriebszustand mit Grenzstrom im fetten Abgas wiedergegeben. Man erkennt die Kathode 12 und die Anode 14 der ersten sowie die Kathode 22 und die Anode 24 der zweiten Pumpzelle und weiterhin die Diffusionsbarrieren 16 und 26. Alle Elektroden sowie die Diffusionsbarrieren sind ringförmig und in den zusammenhängenden und die Elemente des Sensors tragenden Elektrolyten 30 eingebettet. Die Anode 14 und die Kathode 22 sind von keramischen Schutzschichten 15 bzw. 27 bedeckt, die grobporös sind und daher nicht als Diffusionsbarrieren wirken. Auch die Kathode 12 und die Anode 24 sind mit je einer Schutzschicht, 13 und 25, versehen. In den Elektrolyten 30 sind weiterhin die Heizer 70 eingebettet, die durch die Isolation 72 von diesem getrennt sind. Die ringförmigen, beispielsweise aus Zirkondioxid bestehenden Dichtrahmen 80, 82 und 84 dichten die Heizeinrichtung sowie die Diffusionszonen der beiden Pumpzellen gegenüber dem Elektrolyten 30, der die beiden Pumpzellen leitend miteinander verbindet, ab.

**Patentansprüche**

1. Polarographischer Sensor zur Bestimmung der Konzentration bestimmter Bestandteile im Abgas von Verbrennungsmotoren zur Regelung des Luft-/Kraftstoff-Verhältnisses mit zwei elektrochemischen Zellen, **dadurch gekennzeichnet, daß** eine erste Pumpzelle (10) mit einer ersten Kathode (12) und einer ersten Anode (14) sowie eine zweite Pumpzelle (20) mit einer zweiten Kathode (22) und einer zweiten Anode (24) vorgesehen sind, daß die Kathode (12) der ersten Pumpzelle (10) mit einer ersten Diffusionsbarriere (16) und die Anode (24) der zweiten Pumpzelle (20) mit einer zweiten Diffusionsbarriere (26) versehen sind, daß eine Vorrichtung (40) zur Messung der Potentialdifferenz zwischen der ersten Kathode (12) der ersten Pumpzelle (10) und der zweiten Kathode (22) der zweiten Pumpzelle (20) vorgesehen ist, mittels der über die elektromotorische Kraft (EMK) eine Unterscheidung von magerem und fettem Abgas erfolgt, und daß eine Schaltung (50) vorgesehen ist, die bei magerem Abgas den Grenzstrom der ersten Pumpzelle (10) und bei fettem Abgas den Grenzstrom der zweiten Pumpzelle (20) als Signal zur Regelung des Luft-/Kraftstoff-Gemisches heranzieht.

## Claims

1. Polarographic sensor for determining the concentration of certain components in the exhaust gas of internal-combustion engines for regulating the air-fuel ratio, **characterized in that** a first pump cell (10) with a first cathode (12) and a first anode (14), and a second pump cell (20) with a second cathode (22) and a second anode (24) are provided, **in that** the cathode (12) of the first pump cell (10) is provided with a first diffusion barrier (16), and the anode (24) of the second pump cell (20) is provided with a second diffusion barrier (26), **in that** an appliance (40) for measuring the potential difference between the first cathode (12) of the first pump cell (10) and the second cathode (22) of the second pump cell (20) is provided, by means of which appliance lean exhaust gas and rich exhaust gas are distinguished from one another by way of the electromotive force (EMF), and **in that** a circuit (50) is provided which in the case of lean exhaust gas uses the limiting current of the first pump cell (10) and in the case of rich exhaust gas uses the limiting current of the second pump cell (20), as the signal for regulating the fuel/air mixture.

## Revendications

1. Sonde polarographique pour déterminer la concentration de composants déterminés contenus dans les gaz d'échappement de moteurs à combustion interne pour réguler le rapport air/carburant, comprenant deux cellules électrochimiques, **caractérisée par**,

   - une première cellule de pompage (10) avec une première cathode (12) et une première anode (14) ainsi qu'une seconde cellule de pompage (20) avec une seconde cathode (22) et une seconde anode (24),
   - la cathode (12) de la première cellule de pompage (10) étant munie d'une première barrière de diffusion (16) et l'anode (24) de la seconde cellule de pompage (20) étant munie d'une seconde barrière de diffusion (26),
   - un dispositif (40) pour mesurer la différence de potentiel entre la première cathode (12) de la première cellule de pompage (10) et la seconde cathode (22) de la seconde cellule de pompage (20) pour distinguer entre un gaz d'échappement pauvre et un gaz d'échappement riche, à l'aide de la force électromotrice (FEM), et
   - un circuit (50) qui, pour un gaz d'échappement pauvre, utilise le courant limite de la première cellule de pompage (10), et qui pour un gaz d'échappement riche utilise le courant limite de la seconde cellulage de pompage (20) comme signal pour réguler le mélange air/carburant.

# Fig. 1

Fig. 2